# EUROPEAN PATENT SPECIFICATION

(11) **EP 0 893 049 B1**
(45) Date of publication and mention of the grant of the patent: **12.02.2003**
(21) Application number: 97401744.4
(22) Date of filing: 21.07.1997
(51) Int. Cl.: A01D 46/28

(54) **Conveyor means for use in a fruit harvester**
Vorrichtung zum Führen in einer Obsterntemaschine
Dispositif de convoyage dans un récolteuse de fruits

(43) Date of publication of application: 27.01.1999
(73) Proprietor: New Holland Braud S.A., 85220 Coex (FR)
(72) Inventor: Le Nevé, Daniel H.A.M., 85300 Challans (FR); Bossard, Guy M.A.H., 85220 Saint-Révérend (FR); Berthet, Jean-Paul, 85220 La Chaize Giraud (FR)
(74) Representative: Vandenbroucke, Alberic

(56) References cited:
- FR-A- 2 298 266
- FR-A- 2 408 291
- FR-A- 2 634 344
- FR-A- 2 657 335
- FR-A- 2 691 320
- US-A- 5 099 636
- DATABASE WPI Section PQ, Week 8412 Derwent Publications Ltd., London, GB; Class P12, AN 84-073309 XP002051131 & SU 1 020 057 A (KISH PLODSELKHOZMAS) , 30 May 1983

## Description

The present invention relates to machines for harvesting fruit grown on trees or shrubs, such as grapes, berries and the like. More particularly it relates to apparatus for conveying the crop material which has been detached by the harvesting unit from the trees or shrubs to a container.

Grape harvesting machines are commonly equipped with a shaker assembly which straddles a row of vines. The shaker assembly comprises sets of shaker rods which are oscillated to beat or shake the vines vigorously to detach the grapes or bunches of grapes from the vine shrubs. The detached fruit is guided into conveyors on both sides of the vines and conveyed by these conveyors to bins or containers on top of the grape harvester. When the machines reaches the end of a vine row, the bins may be unloaded into a towed cart for further transport to the winery.

The action of the shaker rods on the vines will also detach some foliage therefrom. These leaves are equally received in the conveyors and may get mixed up with the grapes in the bins. Conventionally the harvesting machine is equipped with cleaning means for separating the leaves and other foreign material from the fruit. For example the New Holland Braud grape harvester model SB64 has below the upper run of each conveyor an intermediate apron conveyor for receiving the detached fruit and tipping the same into the bins on each side of the harvester. Over the discharge end of the apron a cleaning fan is installed for extraction of the leaves from the crop material on the apron. The cleaning action is enhanced by the air stream acting on the falling crop.

However it has been observed that the fan not only sucks away the foliage, but also drops of valuable fruit juice. The fruit juice results from grape berries which have burst under the impact of the shaker rods. At the discharge end of the intermediate conveyor the air flow sucks away the juice drops and deposits them together with the leaves aside the machine.

FR-A-2.634.344 discloses a cleaning arrangement in which the juice drops are aspirated through a perforated area of a drum around which the conveyor is rotated. The leaves are sucked against the perforated area and released upon further rotation of the drum. The aspirated juice is collected at the bottom of the fan housing and fed by a drain to a bin. This is a complex arrangement which is prone to choking by leaves which remain stuck to the drum because of the sugar in the juice. Furthermore, the interior of the drum is not accessible for cleaning and will constitute a source for fungi and bacteria.

SU-A-1.020.057 shows a conveyor and cleaning arrangement in which the detached fruit and foliage is received on a pair of apron conveyors provided with combs and buckets. These conveyors deliver the crop material to a second, angled conveyor above which an extraction fan has been installed for removal of the leaves. In their upward run, the combs retain the leaves while permitting passage of the juice and the berries to the buckets. However, leaves and juice are mixed again when they are deposited on the second conveyor. So most of the separation effect is lost.

In FR-A-2.298.266 the detached crop material is deposited onto a conveyor which is constituted by a series of linked containers. Each container has a number of slits through which air is blown at predetermined places. The slits are elevated, thereby constituting trays inbetween for receiving the juice, while the leaves are retained by the elevated portions. Adjacent a suction fan, air is blown through the slits such that the leaves are lifted and drawn into the fan housing. This blowing air flow is provided by the same fan, hence the air below the trays is contaminated with crop and juice particles. In the confined area below the trays, these particles easily get stuck and provide a source for germs and fungi. Moreover, this area is not easily accessible for cleaning.

It is an object of the present invention to remedy to the losses of fruit juice and to provide an improved conveyor arrangement which is less susceptible to unwanted removal of the juice from the crop flow to the bins and is easily accessible for e.g. cleaning and of a less complex nature.

According to the present invention there is provided a fruit harvesting machine, comprising:
a frame equipped with means for travelling over a field;
a harvesting assembly for detaching crop material, comprising fruit and foliage from trees, shrubs and the like standing on said field;
conveyor means for receiving said detached fruit and foliage, together with juice from said fruit, and transporting the same either directly or indirectly to a container, said conveyor means comprising means for separating said fruit juice from said fruit and foliage; and
cleaning means for separating said foliage from said detached fruit,
characterized in that:
said conveyor means comprise a conveyor apron having on its outer surface an array of protrusions for receiving thereon said detached fruit and foliage and permitting the flow of said fruit juice in-between said protrusions; and
said cleaning means are installed above a discharge end of said conveyor means.

The array of protrusions provides for a natural separation of the juice from the remainder of the crop material.

In case the upper run of the apron is inclined upwardly in its normal conveying direction, the juice will migrate rearwardly between the protrusions and be ejected at a lower speed than the solid material resting on the protrusions themselves. Thus are obtained distinct trajectories for the fruit and the leaves on the one hand and the juice on the other hand. The cleaning means, e.g. a fan, may be installed adjacent the trajectory of the solid material to draw therefrom the leaves. As installed at a larger distance from the trajectory of the fluid, the fruit juice will remain substantially unaffected and is permitted to reach the bottom of the container, together with the cleaned fruit.

Advantageously retainer means may be provided on the apron for keeping grapes or berries from rolling back into the harvesting assembly. The ridges preferably are provided with apertures for the passage of juice therethrough such that the rearward flow of the juice is not hampered.

By turning the discharge end of the radius over a small radius, the distance between the top ends of the protrusions increase suddenly and any solid material which might have been trapped inbetween, is released and dislodged.

A fruit harvesting machine in accordance with the present invention will now be described in greater detail, by way of example, with reference to the accompanying drawings, in which:
Figure 1 is a side elevational view of a harvesting machine fitted with a bucket conveyor, an intermediate apron conveyor and a cleaning fan installed over said intermediate conveyor;
Figure 2 is a perspective view of the apron conveyor and a guide plate for guiding the crop material thereto;
Figure 3 is plan view of the apron of the conveyor of Figure 2; and
Figure 4 is a partial cross sectional view of the apron taken along line IV-IV in Figure 3.

In the following description "right hand" and "left hand" references are determined by standing at the rear of the harvester and facing in the direction of normal forward travel. It is also to be understood that, throughout this description, terms such as "forward", "rearward", "upward", "downward", etc. are words of convenience and are not be construed as limiting terms.

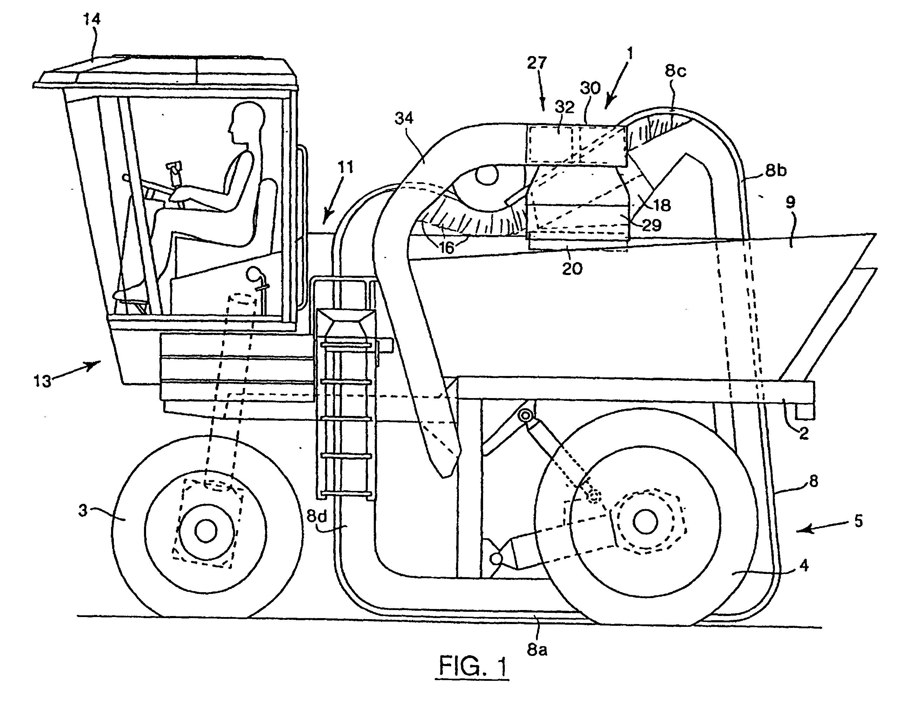

The fruit harvesting machine shown in Figure 1 is a grape harvester, generally indicated by 1 and comprising a chassis or main frame 2, provided with front steerable wheels 3 and rear wheels 4. Both the front wheels 3 and the rear wheels 4 are driven for moving the frame 2 over the ground. The frame 2 is in the form of a gantry in order to be able to straddle a row of plants or shrubs, such as grape-vines. In known manner, the frame 2 carries a harvesting assembly 5, comprising a shaker assembly (not shown) for dislodging the grapes from the vines and two elevator conveyors 8 for collecting the detached grapes and conveying them to two storage tanks or bins 9. The frame 2 further carries an engine 11, providing the rotational power necessary to drive the various active members of the harvesting assembly 5 and the conveyors and also providing motive power to the wheels 3, 4, since the vehicle 1 is of the self-propelled type.

The harvesting assembly 5 may be fixed in a permanent manner to the main frame 2 of the machine, or else, it may be made in the form of a removable assembly which is detachably affixed to the main frame 2, so as to be capable of being replaced by other equipment or accessories, such as spraying equipment, pruning equipment, equipment for tilling the ground, etc.

The driving and harvesting functions of the vehicle are controlled by the operator from an operator's platform 13, which is attached to the front portion of the frame 2 above the left steering wheel 3. To increase the comfort of the operator, an environmentally insulated cab 14 is provided which surrounds the position of the operator on the platform 13.

The elevator conveyors 8 each form a closed loop around the shaker assembly and comprise a closed chain provided with a serious of interconnected cups or buckets 16. Preferably the bottom runs 8a of the conveyors 8 are adjacent to each other and guided on either side of the vine row so as to clamp the foot of the vines and capture the crop material detached by the shaker assembly. The vertical rear runs 8b and front runs 8d of the elevator conveyors 8 diverge upwardly and outwardly from the longitudinal axes of the bottom runs 8a to clear the passage of the upper portion of the plants into and out of the harvesting assembly 5. The velocity of the bottom runs 8a in relation to the frame 2 is equal and opposite to the velocity of the machine along the vine row, such that there is no relative movement of the bottom runs 8a to the stems of the plants which they enclose. Such arrangement precludes premature wear of the buckets and damages to the vines.

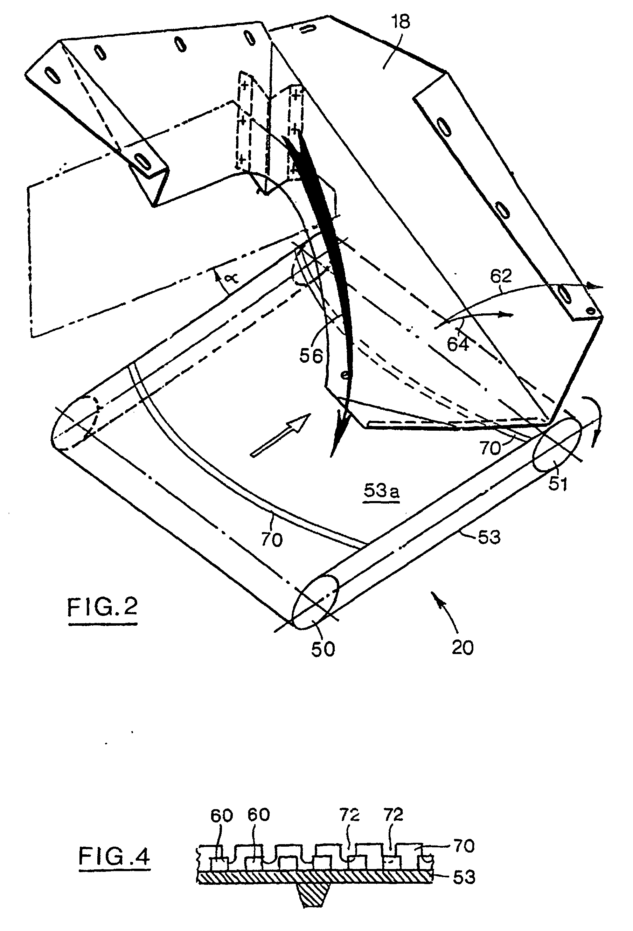

When the conveyors 8 enter their upper run 8c the buckets 16 are tipped over to deposit their contents onto guide plates 18 installed on both sides of the frame 2. Each guide plate 18 (Figure 2) is slantingly arranged to convey the dislodged crop material forwardly to the lower portion of an intermediate apron conveyor 20. The apron conveyors 20 transport the crop material outwardly and slightly upwardly to the bins 9. A longitudinally arranged divider auger (not shown) installed below the discharge end of each apron conveyor 20 assures the proper distribution of the grapes in the bins 9.

Above the discharge ends of the conveyors 20, cleaning means 27 have been installed for extraction of the foliage from the crop material (Figure 1). The cleaning means 27 comprise a hood 29 directed to the discharge area of the conveyor 20 and an extractor fan 30 registering with the top of the hood 29. The fan rotor 32 can be driven at various speeds for creating an upwardly directed air flow which engages the crop material while it is being conveyed on top of the apron conveyor 20 and projected into the bins 9. The trajectory of the heavier crop elements such as the berries or grape bunches is substantially unaffected by the air flow, but the leaves, which have a larger surface to weight ratio, are lifted up and drawn into the fan 30. The extracted leaves are expelled by the fan 30 via a discharge duct 34 mounted over and to the front of the bin 9 and are deposited on the field besides the grape harvester 1. By adjusting the rotational speed of the fan rotors 32 a more or less aggressive action of the fan on the crop material which is being discharged into the bins 9, can be obtained. When the leaves are dry and easily removable the rotor speed may be lowered. When the quantity of leaves in the crop material increases or when they become more sticky, it may be required to increase the rotor speed for effective cleaning of the crop.

As illustrated in Figure 2, each apron conveyor 20 comprises a pair of rollers 50, 51, extending in the longitudinal direction of the harvester 1, and an apron 53 which is installed over the roller pair. One of the rollers 50, 51 is rotated by appropriate motor means such as a hydraulic or electrical motor. In an embodiment of the present invention the apron 53 is driven at a maximum linear speed of approximately 80 m/min. The outer roller 51 is installed somewhat higher than the inner roller 50, such that the upper run 53a of the apron 53 has an inclination α of approximately 15° to the horizontal. The guide plate 18 directs the flow of crop material discharged by the elevator conveyor 8 forwardly and somewhat inwardly as indicated by arrow 56 in Figure 2, such that the bulk of the material is received onto the apron 53 at an angle of about 30° to the transport direction of the apron conveyor 20.

The crop material gathered by the buckets 16 does not only contain loose grapes, grape bunches and leaves, but also fruit juice flowing from the grapes which are burst or bruised by the action of the shaker assembly or by their fall onto the elevator conveyor 8. When collected in the bins 9, this juice can be used for further wine-making. The juice is projected in the form of drops from the apron conveyor 20. It has been experienced that a substantial portion of these drops is sucked away by the fan 30 and ejected through the discharge duct 34 together with the leaves. Hence it is advantageous to remedy to these losses and to separate the juice from the other crop material and convey it along another path remote from the fan 30 to the bins 9.

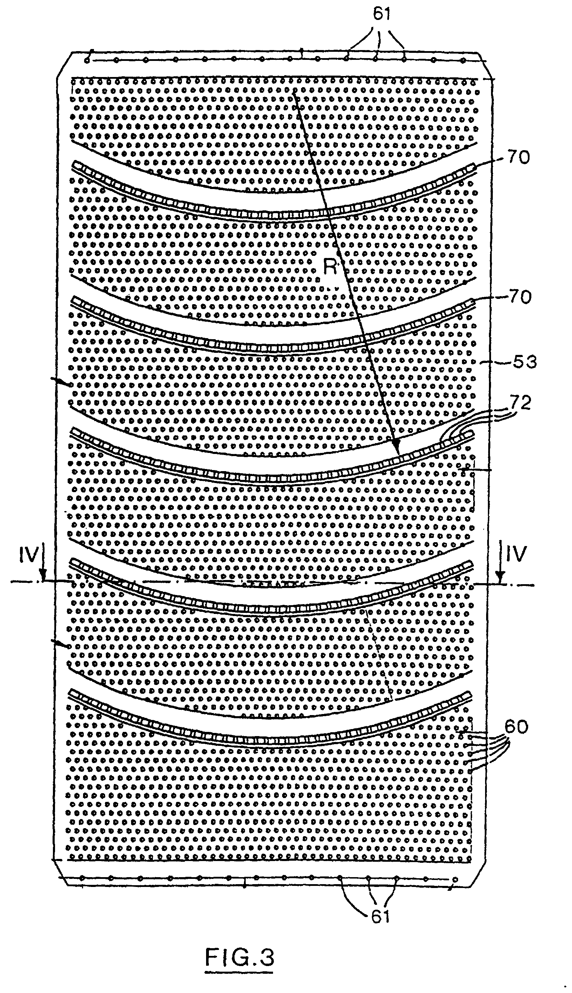

According to a preferred embodiment of the invention the conveyor 20 is equipped with an apron 53 having on its outer surface an array of protrusions 60 for receiving thereon the solid crop material such as grapes and leaves. Figure 3 shows the upper face of an opened apron 53, which may be wrapped around the rollers 50, 51 and then secured in place by connecting together the end portions of the apron by appropriate means such as rivets or bolts through the mounting holes 61. The apron 53 may be made out of polyvinylchloride, polyurethane or any other suitable flexible material.

The protrusions 60 may be cylindric in form, having a circular cross section, but the cross section may also have another form, e.g. square or hexagonal. The height of the protrusions and the distance inbetween is sufficient to enable free flow of the juice below the solid material conveyed by the apron 53. Good results were obtained using cylindric protrusions having a diameter and a height of 4 mm and being spaced at a distance of 8 mm from each other. The protrusions 60 are disposed in a staggered array, providing passages inbetween in a direction substantially parallel to the direction of the incoming crop material delivered by the guide plate 18.

The grapes and leaves are transported towards the bins 9 on the protrusions 60 of the apron 53. At the end of the conveyor 20 they are launched along a trajectory 62 below the fan hood 29 into the bin 9. The juice migrates between the solid material and is collected between the protrusions 60. Because of the impact direction of the crop material and the sloping arrangement of the conveyor 20, the juice tends to flow rearwardly relative to the apron surface. The orientation of the protrusions 60 and the passages in between facilitate this rearward flow. By the time the crop material is tipped over at the discharge end of the apron conveyor 20, a major portion of the juice is collected below the grapes and the leaves, such that it is sheltered by the solid material from the direct action of the fan 30, and its speed relative to the speed of the apron has been reduced substantially. Hence the juice is not be ejected as forcefully as the other, solid material and it follows a distinct, lower trajectory 64 into the bin 9. As a result significantly less juice drops are extracted by the fan 30 and ejected besides the harvester 1.

The high speed of the apron 53 provides an effective removal of the juice from the apron 53 when the latter is turned over along the upper roller 5. The consequent centrifugal forces are greater than the adhesion of the juice to the apron surface and the juice is projected along the lower trajectory 64.

The small diameter of the upper roller 51, e.g. 70 mm, provides a substantial widening of the distance between the tops of the protrusions 60 when the apron 53 is turned over. This arrangement enables the disengagement of pieces of solid material such as limb parts or leave stems which may have been caught between the protrusions 60.

Loose berries may roll back over the protrusions 61. Therefore transverse ridges 70 have been attached across the apron 53. The ridges 70 are curved (radius R) to collect the fruit near the middle of the apron 53 while it is conveyed upwardly to the bin 9. The ridges 70 have a small height, e.g. 9 mm, and do not extend much higher than the protrusions 60, but to provide an effective barrier to the moving fruit, the area immediately in front of the ridges 70 has been kept free of protrusions. Any berries rolling back are received in the dip between the protrusions 60 and the ridge 70 and remain trapped inbetween until the crop material is tipped into the bin 9. The free area should have a width large enough to accommodate at least one berry, e.g. about 25 mm.

In order to prevent accumulation of fruit juice against the transverse ridges 70 and subsequent projection of the juice along the upper trajectory 62, the ridges 70 have been provided with notches 72 which form passages for the backward flow of the juice. The notches 72 extend downwardly from the upper edge of the ridges 70 until a few mm from the surface of the apron 53. The juice is permitted to strain through these notches 72 and it therefore still will have a reduced speed when it is projected by the outer end of the apron conveyor 20. Hence, the lower trajectory 64 of the juice remains substantially unaffected by the ridges 70.

It will be appreciated that thus is provided a simple, yet effective means for separating the juice from the detached fruit and providing a distinct trajectory to the fluid and the solid crop material at the exit of a conveyor.

Although the present invention has been described with reference to a particular type of fruit harvester and conveyor assembly, it will be appreciated that other embodiments can be thought of, without departing however from the original idea of the invention. For example, as indicated above, the protrusions may have a different, non-cylindric shape. Furthermore the protrusions may be of different heights, the higher protrusions replacing the ridges 70. The distribution of the protrusions over the apron 53 may be changed to adapt better to other directions of incoming crop material. The ridges 70 do not need to be curved: they may be straight or in the form of a chevron.

## Claims

1. A fruit harvesting machine (1), comprising:
a frame (2) equipped with means (3, 4) for travelling over a field;
a harvesting assembly (5) for detaching crop material, comprising fruit and foliage from trees, shrubs and the like standing on said field;
conveyor means (8, 18, 20) for receiving said detached fruit and foliage, together with juice from said fruit, and transporting the same either directly or indirectly to a container (9), said conveyor means (8, 18, 20) comprising means (53, 60) for separating said fruit juice from said fruit and foliage; and
cleaning means (27) for separating said foliage from said detached fruit,
**characterized in that**:
said conveyor means (8, 18 ,20) comprise a conveyor apron (53) having on its outer surface an array of protrusions (60) for receiving thereon said detached fruit and foliage and permitting the flow of said fruit juice in-between said protrusions (60); and
said cleaning means (27) are installed above a discharge end of said conveyor means (8, 18, 20).

2. A fruit harvesting machine according to claim 1, **characterized in that** said protrusions have a height substantially equal to 4 mm.

3. A fruit harvesting machine according to claim 1 or 2, **characterized in that** said protrusions are cylindric in form.

4. A fruit harvesting machine according to any of the preceding claims, **characterized in that** said the upper, crop receiving run (53a) of said apron (53) is inclined upwardly in its normal conveying direction.

5. A fruit harvesting machine according to claim 4, **characterized in that** said upper run (53a) is inclined at an angle of substantially 15° to the horizontal.

6. A fruit harvesting machine according to any of the preceding claims, **characterized in that**:
said conveyor means (8, 18, 20) further comprise intermediate conveyor means (18) supplying said detached fruit and foliage material at a predetermined angle to the receiving end of said apron (53); and
said protrusions (60) are arranged in a direction substantially equal to said predetermined angle, thereby permitting free flow of said juice in-between said protrusions (60) in said direction.

7. A fruit harvesting machine according to any of the preceding claims, **characterized in that** said apron (53) is provided with retainer means (70) for retaining thereagainst said fruit while it is being conveyed towards said container (9).

8. A fruit harvesting machine according to claim 7, **characterized in that** said retainer means comprise ridges (70) extending over the width of said apron (53), said ridges having apertures (72) permitting the flow of said juice therethrough.

9. A fruit harvesting machine according to claim 8, **characterized in that** said ridges (70) are curved in shape having a lowest point near the middle of said apron (53).

10. A fruit harvesting machine according to any of the claims 7 to 9, **characterized in that** the apron area immediately in front of said retainer means (70) is free from protrusions (60).

11. A fruit harvesting machine according to any of the preceding claims, **characterized in that** at its discharge end, the apron (53) is turned over a small radius to suddenly increase the distance between the top ends of said protrusions (60) and dislodge any solid material trapped in between.

12. A fruit harvesting machine according to any of the preceding claims, **characterized in that** said cleaning means (27) comprise a hood (29) having an inlet installed over said discharge end and an outlet registering with a fan (30) for drawing said foliage into said inlet.

## Patentansprüche

1. Fruchtemtemaschine (1) mit:
einem Rahmen (2), der mit Einrichtungen (3, 4) zur Vorwärtsbewegung über ein Feld ausgerüstet ist,
einer Emtebaugruppe (5) zum Trennen von Erntematerial, das Früchte und Blattwerk umfaßt, von Blättern, Büschen und dergleichen, die auf dem Feld stehen,
Fördereinrichtungen (8, 18, 20) zur Aufnahme der abgetrennten Früchte und des Blattwerks zusammen mit Saft von den Früchten und zu deren bzw. dessen Transport entweder direkt oder indirekt zu einem Behälter (9), wobei die Fördereinrichtungen (8, 18, 20) Einrichtungen (53, 60) zum Trennen des Fruchtsaftes von den Früchten und dem Blattwerk umfassen, und
Reinigungseinrichtungen (27) zum Trennen des Blattwerkes von den abgetrennten Früchten,
**dadurch gekennzeichnet, daß**:
die Fördereinrichtungen (8, 18, 20) ein Förderband (53) umfassen, das auf seiner äußeren Oberfläche eine Anordnung von Vorsprüngen (60) aufweist, um auf diesen die abgetrennten Früchte und das Blattwerk aufzunehmen und um die Strömung des Fruchtsaftes zwischen den Vorsprüngen (60) zu ermöglichen, und
die Reinigungseinrichtungen (27) oberhalb eines Abgabeendes der Fördereinrichtungen (8, 18, 20) installiert sind.

2. Fruchtemtemaschine nach Anspruch 1, **dadurch gekennzeichnet, daß** die Vorsprünge eine Höhe von im wesentlichen 4 mm haben.

3. Fruchtemtemaschine nach Anspruch 1 oder 2, **dadurch gekennzeichnet, daß** die Vorsprünge eine zylindrische Form aufweisen.

4. Fruchtemtemaschine nach einem der vorhergehenden Ansprüche, **dadurch gekennzeichnet, daß** der obere, das Erntematerial aufnehmende Strang (53a) des Förderbandes (30) in seiner normalen Fördereinrichtung nach oben geneigt ist.

5. Fruchterntemaschine nach Anspruch 4, **dadurch gekennzeichnet, daß** der obere Strang (53a) unter einem Winkel von im wesentlichen 15 Grad zur Horizontalen geneigt ist.

6. Fruchterntemaschine nach einem der vorhergehenden Ansprüche, **dadurch gekennzeichnet, daß**:
die Fördereinrichtungen (8, 18, 20) weiterhin Zwischenfördereinrichtungen (18) umfassen, die die abgetrennten Früchte und das Blattmaterial unter einem vorgegebenen Winkel zum Aufnahmeende des Förderbandes (53) liefern, und
die Vorsprünge (60) in einer Richtung im wesentlichen gleich des vorgegebenen Winkels angeordnet sind, wodurch die freie Strömung des Saftes zwischen den Vorsprüngen (60) in der genannten Richtung ermöglicht wird.

7. Fruchterntemaschine nach einem der vorhergehenden Ansprüche, **dadurch gekennzeichnet, daß** das Förderband (53) mit Halteeinrichtungen (70) zum Halten der Früchte gegen diese versehen ist, während sie in Richtung auf den Behälter (9) bewegt werden.

8. Fruchterntemaschine nach Anspruch 7, **dadurch gekennzeichnet, daß** die Halteeinrichtungen Wülste (70) umfassen, die sich über die Breite des Förderbandes (53) erstrecken, wobei die Wülste Öffnungen (72) aufweisen, die die Strömung des Saftes durch diese hindurch ermöglichen.

9. Fruchterntemaschine nach Anspruch 8, **dadurch gekennzeichnet, daß** die Wülste (70) in ihrer Form gekrümmt sind und einen niedrigsten Punkt in der Nähe der Mitte des Förderbandes (53) aufweisen.

10. Fruchterntemaschine nach einem der Ansprüche 7 - 9, **dadurch gekennzeichnet, daß** der Förderband-Bereich unmittelbar vor den Halteeinrichtungen (70) von Vorsprüngen (60) frei ist.

11. Fruchterntemaschine nach einem der vorhergehenden Ansprüche, **dadurch gekennzeichnet, daß** das Förderband (53) an seinem Abgabeende über einen kleinen Radius gewendet wird, um plötzlich den Abstand zwischen den oberen Enden der Vorsprünge (60) zu vergrößern und irgendwelches zwischen diesen eingefangenes festes Material herauszulösen.

12. Fruchterntemaschine nach einem der vorhergehenden Ansprüche, **dadurch gekennzeichnet, daß** die Reinigungseinrichtungen (27) eine Haube (29) umfassen, die einen über dem Abgabeende eingebauten Einlaß und einen Auslaß aufweist, der mit einem Gebläse (30) zum Saugen des Blattwerkes in den Einlaß ausgerichtet ist.

## Revendications

1. Récolteuse de fruits (1) comprenant:
un châssis (2) équipé de moyens de déplacement (3, 4) sur un champ;
un ensemble de récolte (5) destiné à détacher du matériau de récolte, comprenant des fruits et du feuillage provenant d'arbres, d'arbustes et de plantes similaires plantés sur ledit champ;
des moyens de convoyeur (8, 18, 20) destinés à recueillir lesdits fruits et feuillage détachés, en commun avec du jus issu desdits fruits, et à transporter ces derniers soit directement, soit indirectement vers un conteneur (9), lesdits moyens de convoyeur (8, 18, 20) comprenant des moyens (53, 60) pour séparer ledit jus de fruit hors desdits fruits et feuillage; et
des moyens de nettoyage (27) destinés à séparer ledit feuillage hors desdits fruits détachés,
**caractérisée en ce que**:
lesdits moyens de convoyeur (8, 18, 20) comprennent un tablier de convoyeur (53) possédant à sa surface extérieure une série de saillies (60) pour y recevoir lesdits fruits détachés et feuillage et pour permettre l'écoulement dudit jus de fruit entre lesdites saillies (60) ; et
lesdits moyens de nettoyage (27) sont installés au-dessus d'une extrémité de déversement desdits moyens de convoyeur (8, 18, 20).

2. Récolteuse de fruits selon la revendication 1, **caractérisée en ce que** lesdites saillies ont une hauteur substantiellement égale à 4 mm.

3. Récolteuse de fruits selon la revendication 1 ou 2, **caractérisée en ce que** lesdites saillies sont de forme cylindrique.

4. Récolteuse de fruits selon l'une quelconque des revendications précédentes, **caractérisée en ce que** ledit brin supérieur (53a) dudit tablier (53) recueillant le matériau de récolte est incliné vers le haut suivant son sens normal de transport.

5. Récolteuse de fruits selon la revendication 4, **caractérisée en ce que** ledit brin supérieur (53a) est incliné suivant un angle de substantiellement 15° par rapport à l'horizontale.

6. Récolteuse de fruits selon l'une quelconque des revendications précédentes, **caractérisée en ce que**:
lesdits moyens de convoyeur (8, 18, 20) comprennent en outre des moyens supplémentaires de transport (18) alimentant ledit matériau de fruits et de feuillage détachés suivant un angle prédéterminé sur l'extrémité de réception dudit tablier (53); et
lesdites saillies (60) sont disposées dans une direction substantiellement identique audit angle prédéterminé, en permettant ainsi un écoulement libre dudit jus entre lesdites saillies (60) dans ladite direction.

7. Récolteuse de fruits selon l'une quelconque des revendications précédentes, **caractérisée en ce que** ledit tablier (53) est pourvu de moyens de retenue (70) pour retenir contre eux lesdits fruits durant leur transport vers ledit conteneur (9).

8. Récolteuse de fruits selon la revendication 7, **caractérisée en ce que** lesdits moyens de retenue comprennent des arêtes (70) s'étendant sur la largeur dudit tablier (53), lesdites arêtes possédant des ouvertures (72) permettant l'écoulement dudit jus à travers elles.

9. Récolteuse de fruits selon la revendication 8, **caractérisée en ce que** lesdites arêtes (70) sont incurvées suivant une forme ayant son point le plus bas à proximité du milieu dudit tablier (53).

10. Récolteuse de fruits selon l'une quelconque des revendications 7 à 9, **caractérisée en ce que** la zone de tablier à l'avant immédiat desdits moyens de retenue (70) est dépourvue de saillies (60).

11. Récolteuse de fruits selon l'une quelconque des revendications précédentes, **caractérisée en ce qu'**à son extrémité de déversement, le tablier (53) est retourné sur un petit rayon afin d'accroître soudainement la distance entre les extrémités supérieures desdites saillies (60) et dégager une quelconque matière solide piégée entre elles.

12. Récolteuse de fruits selon l'une quelconque des revendications précédentes, **caractérisée en ce que** lesdits moyens de nettoyage (27) comprennent un capot dont l'entrée est installée par-dessus ladite extrémité de déversement et une sortie coïncidant avec un ventilateur (30) pour aspirer ledit feuillage dans ladite entrée.
